# EUROPÄISCHE PATENTANMELDUNG

(11) **EP 2 017 178 A2**
(43) Veröffentlichungstag der Anmeldung: **21.01.2009**
(21) Anmeldenummer: 08013126.1
(22) Anmeldetag: 21.07.2008
(51) Int. Cl.: B65D 3/22, B32B 27/30, B32B 27/10, B65D 3/14

(54) **Flüssigkeitsbehälter, dessen Mantel weitgehend aus zellstoffhaltigem Material besteht**

(30) Priorität: 19.07.2007 DE 102007033974
(71) Anmelder: Firma Keienburg Agentur für Verpackung GmbH, 26817 Rhauderfehn (DE)
(72) Erfinder: Keienburg, Günther, 26683 Saterland-Stücklingen (DE)
(74) Vertreter: Sroka, Peter-Christian

(57) **Zusammenfassung**

Ein Flüssigkeitsbehälter für unter Überdruck stehende, insbesondere Kohlensäure enthaltende Getränke mit einem durch Deckel- und Bodenelemente (3) verschlossenen Behältermantel (1), der aus mindestens einer parallel gewickelten Lage aus einem zellstoffhaltigen Material, vorzugsweise in Form von Karton bzw. Pappe, und mindestens einer flüssigkeitsdichten Sperrschicht besteht, ist dadurch gekennzeichnet, dass die dem Behälterinhalt zugewandte Innenmantelfläche eine EVOH-Barriereschicht mit einem Gewicht, vorzugsweise im Bereich von 8 bis 12 g/m², vorzugsweise 10 g/m², aufweist, wobei vorzugsweise sowohl der Behältermantel (1) als auch die Deckel-/Bodenelemente (3) Manschettenlippen (1.1' bzw. 3) zur Ausbildung eines Doppelfalzes bei dem geschlossenen Behälter aufweisen.

## Beschreibung

Die Erfindung betrifft einen Flüssigkeitsbehälter für unter Überdruck stehende, insbesondere Kohlensäure enthaltende Getränke mit einem durch Boden- und Deckelelemente verschlossenen Behältermantel, der aus mindestens einer parallel gewickelten Lage aus einem zellstoffhaltigen Material und mindestens einer flüssigkeits-dichten Sperrschicht besteht.

Derartige Behälter in Form von Getränkedosen sind beschrieben in JP 2004-115080 A, JP 09301339 A und JP 02233349 A, wobei als Basiswerkstoff für den Dosenmantel Papier- oder Pappmaterial dient.

So zeigt insbesondere die JP 09301339 A eine Dose, deren Mantel aus einem laminierten Papierkarton mit einer inneren und einer äußeren Papierschicht besteht. Derartige Dosen sind in der Lage, dem Druck kohlensäurehaltiger Getränke standzuhalten.

Die DE 699 04 527 T2 beschreibt eine Getränkedose, deren Mantel aus zellstoffhaltigem Material, insbesondere Pappe, besteht und entweder schraubenförmig oder longitudinal gewickelt sein kann.

Die DE 699 10 221 T2 behandelt einen Verbundbehälter, insbesondere für Lebensmittel, mit einer Behälterwand, die mehrere Pappelagen aufweisen kann, wobei die Lagen aus mehreren Schichten, insbesondere Schichten aus Pappe mit hoher Festigkeit und Schichten aus Pappe mit geringer Festigkeit gebildet sein können, wodurch insbesondere die Festigkeit in axialer Richtung des Behälters erhöht werden soll.

Bei den üblichen dosenförmigen Getränkebehältern ist es ebenfalls bekannt, Böden und Deckel aus Metall zu verwenden, die in geeigneter Weise unten und oben mit dem Behältermantel verbunden bzw. daran befestigt sind. Der Deckel hat in der Regel zum Öffnen bzw. Entleeren des Behälters eine Aufreisslasche.

Der Erfindung liegt die Aufgabe zugrunde, einen Getränkebehälter insbesondere in Dosenform so zu gestalten, dass er einerseits eine ausreichende Festigkeit aufweist, um über längere Zeit dem Innendruck des Behälters standzuhalten, und andererseits auch so gestaltet ist, dass es nicht zu einer nachteiligen Beeinflussung des Behälterinhaltes kommt.

Zur Lösung dieser Aufgabe ist der Flüssigkeitsbehälter der eingangs geschilderten Art dadurch gekennzeichnet, dass die dem Behälterinhalt zugewandte Innenmantelfläche eine EVOH-Barriereschicht mit einem Gewicht vorzugsweise im Bereich von 8 bis 12 g/m², vorzugsweise 10 g/m², aufweist.

Weitere Merkmale der Erfindung sind in den Unteransprüchen behandelt.

Die Erfindung wird im folgenden anhand der beigefügten Zeichnung näher beschrieben.
Figur 1 zeigt eine Schnittansicht des Behälters;
Figur 2 zeigt ausschnittsweise die Doppelfalz-Ausbildung der Manschettenlippe des Behältermantels und der Deckellippe vor dem Verpressen;
Figur 3 zeigt ausschnittsweise die Doppelfalz-Ausbildung nach dem Verpressen mit besonders lang ausgebildeten Manschettenlippen des Behältermantels und des Deckels;
Figur 4 zeigt eine der Figur 3 entsprechende Ansicht mit kürzer ausgebildeten Manschettenlippe des Behälters.

Die Zeichnung zeigt ausschnittsweise einen zylinderförmigen Behältermantel 1 mit einem Innendurchmesser d von ca. 50 mm, vorzugsweise 49,8 mm plus/minus 0,1 sowie einem Außendurchmesser D in der Größenordnung von etwa 50,9 mm, mit dem Ergebnis, dass die hauptsächlich aus Papier- oder Pappmaterial bestehende Behälterwand eine Dicke a in der Größenordnung von 0,5545 mm hat. Diese Werte beziehen sich auf einen Behälter, der beispielsweise eine Höhe H von 190 mm hat. Es versteht sich, dass diese Abmessungen in Abhängigkeit von dem erwünschten Behälterfüllvolumen und dem Getränk-abhängigen notwendigen Innendruck variieren können.

Der Behältermantel besteht vorzugsweise aus einem 4-lagigen Sulfatkarton mit einem Kartongewicht in der Größenordnung von 220 bis 270 g/m², vorzugsweise im Bereich von etwa 250 g/m². Die Außenseite des Behältermantels ist mit einer PE-Beschichtung mit einem Gewicht in der Größenordnung von 18 bis 22 g/m², vorzugsweise im Bereich von 20 g/m² versehen. Die Behältermantelinnenseite hat eine PA/PE-Beschichtung mit einem Gewicht in der Größenordnung von etwa 18 bis 22 g/m², vorzugsweise etwa 20 g/m². Die Beschichtungen werden vorzugsweise im Gießextrusionsverfahren aufgetragen, wobei im Bereich der Behältermantelinnenseite zuerst die PE-Beschichtung und dann die PA-Beschichtung erfolgt. Bei der PA/PE-Beschichtung liegt der PA-Anteil im Bereich von etwa 75 - 85 %, vorzugsweise im Bereich von etwa 80 %, Rest PE.

Die dem Produkt zugewandte Innenseite des Behältermantels hat eine weitere EVOH-Barriereschicht mit einem Gewicht von vorzugsweise 8 bis 12 g/m², insbesondere im Bereich von 10 g/m², ebenfalls vorzugsweise aufgetragen im Gießextrusionsverfahren.

Zur Herstellung des Behältermantels wird vorzugsweise eine Parallelwicklung angewandt, wobei während des Wickelvorganges oben und unten Manschettenlippen 1.1 mit einer Breite b in der Größenordnung von etwa 2 bis 3,5 mm, vorzugsweise etwa 3 mm zum Anbringen der nicht dargestellten Boden- und Deckelelemente gebildet werden. Der Behältermantel wird fixiert durch eine Hochfrequenz-Schweißmittelnaht von 10 mm Breite.

Eine Breite b im Bereich von etwa 2 bis 3,5 mm reicht beim Anbringen der Behälterdeckel und -böden in der Regel zur Bildung eines Einfachfalzes für Behälter aus, die nach dem Befüllen unter einem geringen Überdruck stehen.

Doppelfalze an den Enden des Behältermantels dienen dazu, die Rückstellkräfte des insbesondere 4-lagigen Sulfatkartons einzudämmen. Darüber hinaus besteht noch die Möglichkeit, eine Prägung im Falz vorzunehmen, wodurch die Behälterfestigkeit erhöht wird.

Die EVOH-Beschichtung gewährleistet, dass der Behälterinhalt über einen langen Zeitraum keine Geschmacksveränderung erfährt.

Die PA-Beschichtung erfolgt durch Extrudieren bei Temperaturen von/bis über 240 °C vor dem Wickelvorgang.

Die PA-Beschichtung sowohl an der Innenseite als auch auf der Außenseite des Behältermantels dient zur Stabilisation des Behältermantels, und zwar aufgrund der hohen Reißfestigkeit, hohen Bruchdehnung und der Druckfestigkeit des Materials, sowie aufgrund seines geringen Abriebs bei der Verarbeitung.

| | |
|---|---|
| PA - | Polyamid |
| PE - | Polyethylen |
| EVOH - | Ethylen-Vinyl-Alkohol-Copolymer |

Für Behälter, die nach dem Befüllen unter höheren Innendrücken stehen ist, gemäß weiterer Erfindung vorgesehen, die Breite und damit die Länge der Manschettenlippen zu erhöhen, so dass dann bei dem Verpressen mit den dann entsprechend gestalteten Deckeln/Böden 3 die Ausbildung eines Mehrfachfalzes, vorzugsweise Doppelfalzes, möglich ist. Dieser Vorgang ist ein Doppelwickel-Falzvorgang, wobei die seitliche Pressung der äußeren Ringabschnitte der Deckel und Boden in der Behälterschließmaschine stattfinden.

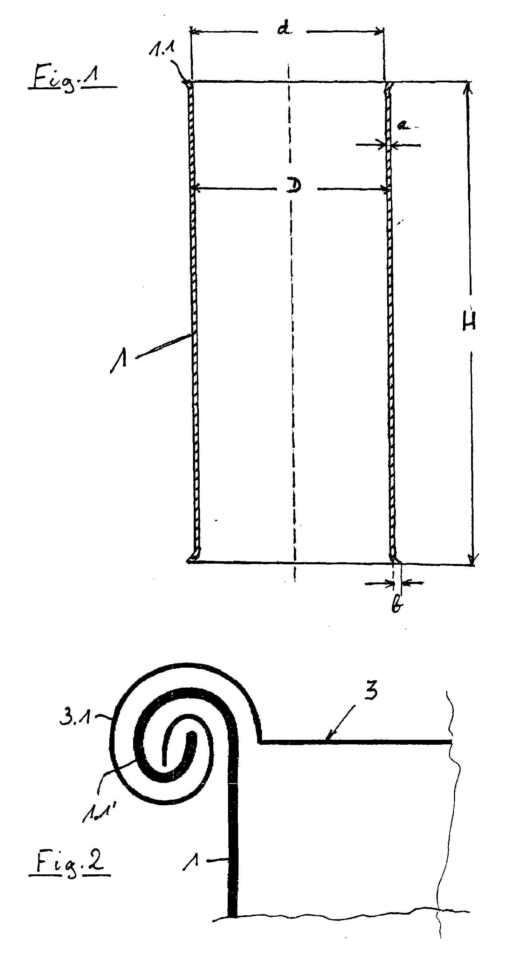

In den Figuren 2 bis 4 ist diese Mehrfachfalz-Ausbildung schematisiert dargestellt.

Gemäß Figur 2 folgt vor dem Verpressen, d.h. vor dem Verschließen des Behälters, die sich an den zylindrischen Teil des Behältermantels 1 anschließende Manschettenlippe 1.1' zuerst einem nach außen gerichteten Bogen, an den sich ein nach unten gerichteter Bogenabschnitt anschließt, auf den wiederum ein nach oben gerichteter Bogenabschnitt folgt.

Die Manschettenlippe 3.1 des Behälterdeckels 3 umschließt die Manschettenlippe 1.1' ebenfalls bogenförmig und ist mit ihrem Endabschnitt zusätzlich noch um das Ende der Manschettenlippe 1.1 herum gelegt.

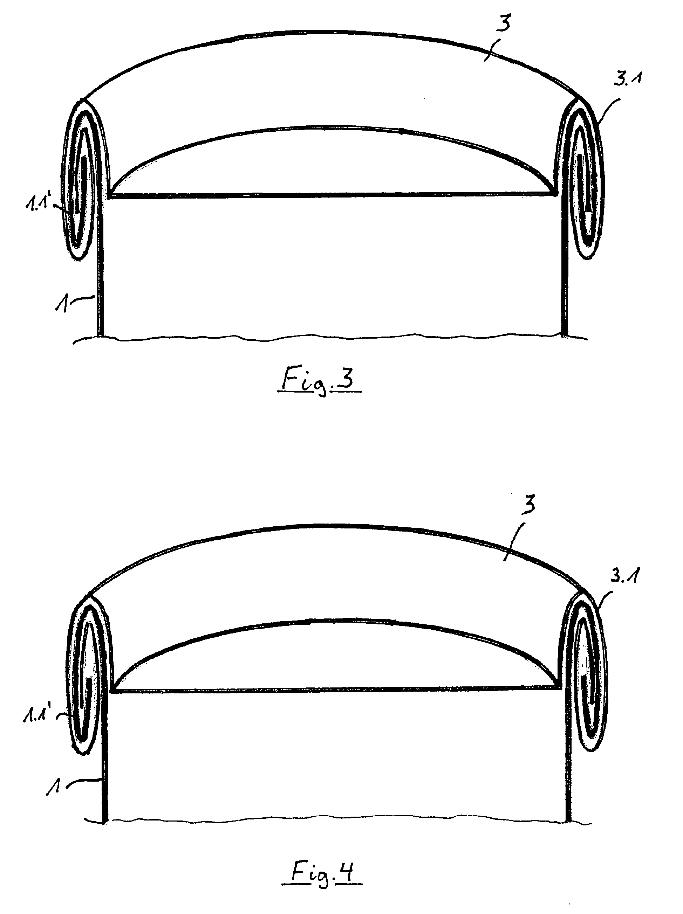

Die Figuren 3 und 4 zeigen entsprechend der Darstellung von Figur 2 den mit dem Behältermantel 1 bzw. dessen Manschettenlippe 1.1' verpressten Deckel 3.

## Patentansprüche

1. Flüssigkeitsbehälter für unter Überdruck stehende, insbesondere Kohlensäure enthaltende Getränke mit einem durch Boden- und Deckelelemente (3) verschlossenen Behältermantel (1), der aus mindestens einer parallel gewickelten Lage aus einem zellstoffhaltigen Material, vorzugsweise in Form von Karton bzw. Pappe, und mindestens einer flüssigkeitsdichten Sperrschicht besteht, **dadurch gekennzeichnet, dass** die dem Behälterinhalt zugewandte Innenmantel-fläche eine EVOH-Barriereschicht mit einem Gewicht vorzugsweise im Bereich von 8 bis 12 g/m², vorzugsweise 10 g/m², aufweist.

2. Flüssigkeitsbehälter nach Anspruch 1, **dadurch gekennzeichnet, dass** die Behälterwand aus vorzugsweise 4-lagigem Sulfatkarton mit einem Gewicht in der Größenordnung von 220 bis 270 g/m², vorzugsweise etwa 250 g/m², besteht.

3. Flüssigkeitsbehälter nach Anspruch 1 oder 2, **dadurch gekennzeichnet, dass** das Kartonmaterial an der Innenseite eine PE-Beschichtung und eine darauf angebrachte PA-Beschichtung aufweist, wobei das Gewicht der PE/PA-Beschichtung im Bereich von 18 bis 22 g/m², vorzugsweise 20 g/m², aufweist.

4. Flüssigkeitsbehälter nach Anspruch 3, **dadurch gekennzeichnet, dass** die PE/PA-Beschichtung einen PA-Anteil im Bereich von etwa 75 bis 85 %, vorzugsweise im Bereich von etwa 80 %, Rest PE, aufweist.

5. Flüssigkeitsbehälter nach einem der Ansprüch 1 bis 4, **dadurch gekennzeichnet, dass** er eine PE-Außenbeschichtung mit einem Gewicht im Bereich von etwa 18 bis 20 g/m², vorzugsweise im Bereich von etwa 20 g/m², aufweist.

6. Flüssigkeitsbehälter nach einem der Ansprüche 1 bis 5, **dadurch gekennzeichnet, dass** die Schichten/Beschichtungen im Gießextrusionsverfahren aufgetragen sind.

7. Flüssigkeitsbehälter nach einem der Ansprüche 1 bis 6, **dadurch gekennzeichnet, dass** jede PA-Schicht aus PA7 besteht.

8. Flüssigkeitsbehälter nach einem der Ansprüche 1 bis 7, **dadurch gekennzeichnet, dass** der Behältermantel an seinen oberen und unteren Enden Manschettenlippen (1.1) zum Verpressen mit Behälterdeckeln bzw. Behälterböden (3) unter Ausbildung eines Einfachfalzes aufweist.

9. Flüssigkeitsbehälter nach einem der Ansprüche 1 bis 7, **dadurch gekennzeichnet, dass** die an den zylindrischen Abschnitt des Behälters (1) anschließende Manschettenlippe (1.1') zuerst einem nach oben gerichteten Bogen, dann einem nach unten gerichteten Bogen und anschließend wiederum einem nach oben gerichteten Bogen folgt, und dass die Manschettenlippe (3.1) des Behälterdeckels/bodens (3) die Manschettenlippe (1.1) über ihre gesamte Länge umhüllt und mit ihrem Endabschnitt um das Ende der Manschettenlippe (1.1) herum geführt ist.
